# EUROPEAN PATENT APPLICATION

(11) **EP 3 139 622 A1**
(43) Date of publication of application: **08.03.2017**
(21) Application number: 14890865.0
(22) Date of filing: 28.04.2014
(51) Int. Cl.: H04N 21/462, H04N 21/433

(54) **DIGITAL-BROADCASTING RECEIVER AND PROGRAM-INFORMATION STORAGE METHOD**

(71) Applicant: Mitsubishi Electric Corporation, Chiyoda-ku Tokyo 100-8310 (JP)
(72) Inventor: YUKAWA, Maki, Tokyo 100-8310 (JP); OKUBO, Tadatoshi, Tokyo 100-8310 (JP); HONDA, Katsuhiko, Tokyo 100-8310 (JP); KUWAHARA, Masato, Tokyo 100-8310 (JP)
(74) Representative: Hoffmann Eitle
(86) International application number: PCT/JP2014/061874
(87) International publication number: WO 2015/166534

(57) **Abstract**

Disclosed is a digital broadcast receiver including a receiver 3 to receive a digital broadcast, a separator 4 to separate program information from a received signal of the receiver 3 , a nonvolatile storage 7 to store program information, a main storage 5 to temporarily store program information read from the nonvolatile storage 7, and a central processor 6 to restrict the storing of program information in accordance with its temporal distance from the current time, to generate a program guide on the basis of program information read from the main storage 5, and to display the program guide on a display device 9.

## Description

### FIELD OF THE INVENTION

The present invention relates to a digital broadcasting receiver for and a program information storage method of acquiring program information of a digital broadcast and storing the program information in a storage.

### BACKGROUND OF THE INVENTION

In a digital broadcast, the pieces of program information about programs for a predetermined number of days are sent out.

Further, a digital broadcasting receiver stores the pieces of program information received thereby in a nonvolatile storage after temporarily storing the received pieces of program information in a main storage. The pieces of program information stored in the nonvolatile storage are read out to the main storage, and are used for the display of a program guide.

In the conventional digital broadcasting receiver, it is necessary to prepare storages each having a volume corresponding to the number of channels and the number of days of program information, all pieces of program information to be broadcasted within the number of days being sent out, as the main storage and the nonvolatile storage, respectively.

In order to achieve a reduction in the amount of usage of the storage required to store pieces of program information, in a digital broadcasting receiver described in, for example, patent reference 1, the storing of program information is restricted on the basis of the number of days counted from the date on which the storing of program information is started. Further, patent reference 2 discloses a digital broadcasting receiver which does not store the pieces of program information for the next day unless all the pieces of program information for one day, except for all the pieces of program information for the day, are stored.

### RELATED ART DOCUMENT

### PATENT REFERENCE

Patent reference 1: Japanese Unexamined Patent Application Publication No. 2006-41860
Patent reference 2: Japanese Unexamined Patent Application Publication No. 2003-152577

### SUMMARY OF THE INVENTION

### PROBLEMS TO BE SOLVED BY THE INVENTION

In digital broadcasts in Europe and so on, multiple channelization has advanced. For example, a broadcast having approximately 300 channels is implemented. Therefore, the program number also increases, and the program information has a huge amount when it also includes detailed information showing the program content and so on. Therefore, in order to store all the pieces of program information about programs for some days, which are sent out from a broadcasting station, it is necessary to prepare large-volume storages as both the main storage and the nonvolatile storage.

In contrast, in the conventional technology represented by patent reference 1, the storing of program information is restricted on the basis of the number of days counted from the date on which the storing of program information is started. Therefore, when the date on which the storing of program information is started is one before the current time, all the pieces of program information about programs broadcasted between the current time and the past date that the storing was started are storage objects. In the case of a digital broadcast service which provides many channels, there is a possibility that even if the pieces of program information about programs broadcasted between the current time and the past date that the storing was started are stored, the stored pieces of program information has a huge amount. Therefore, the effect of reducing the amount of usage of the storage required to store pieces of program information is insufficient.

Because in the conventional technology represented by patent reference 2 no restriction is imposed upon the storing of program information for the day, all the pieces of program information about programs for the day may be storage objects. Therefore, when the multiple channelization of digital broadcasts advances and the pieces of program information about programs for the day has a huge amount, a large-volume storage is needed in order to store the huge amount of program information.

The present invention is made in order to solve the above-mentioned problems, and it is therefore an object of the present invention to provide a digital broadcasting receiver and a program information storage method capable of reducing the amount of usage of a storage required to store pieces of program information.

### MEANS FOR SOLVING THE PROBLEM

According to the present invention, there is provided a digital broadcast receiver including: a receiver to receive a digital broadcast; a separator to separate program information from a received signal of the receiver; a nonvolatile storage to store program information; a temporary storage to temporarily store program information read from the nonvolatile storage; and a central processor to restrict the storing of program information in accordance with its temporal distance from the current time, to generate a program guide on the basis of program information read from the temporary storage, and to display the program guide on a display device.

### ADVANTAGES OF THE INVENTION

According to the present invention, there is provided an advantage of being able to reduce the amount of usage of the storage required to store piece of program information.

### BRIEF DESCRIPTION OF THE FIGURES

[Fig. 1] Fig. 1 is a block diagram showing the configuration of a digital broadcasting receiver according to Embodiment 1 of the present invention;
[Fig. 2] Fig. 2 is a flow chart showing a process of storing pieces of program information in a nonvolatile storage in the digital broadcasting receiver according to Embodiment 1;
[Fig. 3] Fig. 3 is a flow chart showing a process of storing pieces of program information in a main storage in the digital broadcasting receiver according to Embodiment 1;
[Fig. 4] Fig. 4 is a diagram showing a concept for the channel display order of a program guide;
[Fig. 5] Fig. 5 is a diagram showing a concept for the program display order of the program guide;
[Fig. 6] Fig. 6 is a diagram showing the concept underlying the process of storing pieces of program information; and
[Fig. 7] Fig. 7 is a flow chart showing a process of selecting program information by making a time comparison in the digital broadcasting receiver according to Embodiment 1.

### EMBODIMENTS OF THE INVENTION

Hereafter, in order to explain this invention in greater detail, the preferred embodiments of the present invention will be described with reference to the accompanying drawings. Embodiment 1.

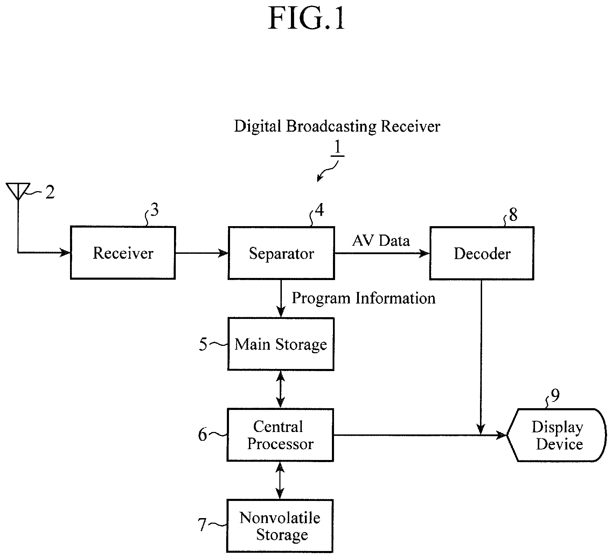

Fig. 1 is a block diagram showing the configuration of a digital broadcast receiver according to Embodiment 1 of the present invention. Referring to Fig. 1, the digital broadcast receiver 1 is mounted in, for example, a moving object, such as a vehicle, and includes an antenna 2, a receiver 3, a separator 4, a main storage 5, a central processor 6, a nonvolatile storage 7, a decoder 8 and a display device 9.

The receiver 3 acquires the received signal of a broadcast wave having a preset frequency from among digital broadcast waves received by the antenna 2. The separator 4 separates AV data and program information from the received signal acquired by the receiver 3. The AV data are converted into an image signal and a sound signal by the decoder 8, and an image is displayed on the display device 9.

The main storage 5 is a volatile one from which information can be read at a higher speed than that in the nonvolatile storage 7, and which cannot hold the contents thereof when the power supply of the digital broadcast receiver 1 is turned off. The main storage 5 also functions as a temporary storage that temporarily stores pieces of program information read from the nonvolatile storage 7 and used for generation of a program guide. More specifically, the central processor 6 reads pieces of program information from the nonvolatile storage 7 , temporarily stores them in the main storage 5, generates a program guide on the basis of the pieces of program information read from the main storage 5, and displays the program guide on the display device 9.

The nonvolatile storage 7 is one in which pieces of program information are stored, and is disposed in order to hold the pieces of program information even if the power supply of the digital broadcast receiver 1 is turned off.

The central processor 6 restricts the pieces of program information stored in the nonvolatile storage 7 dependently upon their temporal distances from the current time. Because the storing of each program information which is a storage object is restricted dependently upon its temporal distance from the current time even if the program information is one about a program for the day, the amount of usage of the storage required to store pieces of program information can be reduced remarkably compared with that in the conventional digital broadcast receivers.

Next, operations will be explained.

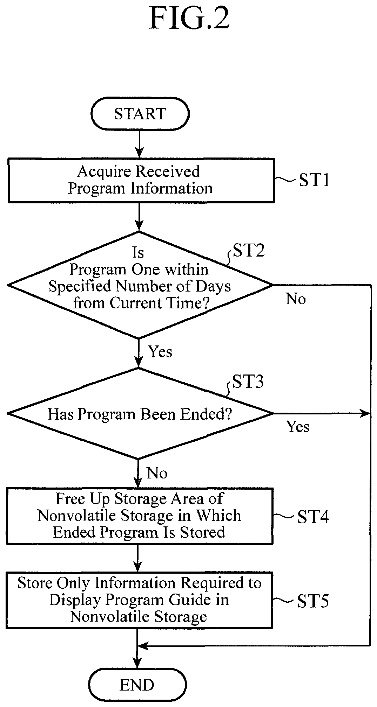

Fig. 2 is a flow chart showing the processing for storing program information in the nonvolatile storage in the digital broadcast receiver according to Embodiment 1.

First, the receiver 3 receives a digital broadcast via the antenna 2, and acquires the received signal. The separator 4 separates AV data and program information from the received signal acquired by the receiver 3. The program information separated from the received signal by the separator 4 is stored temporarily in the main storage 5. The processes explained hitherto correspond to step ST1.

Not the pieces of program information about all programs are sent out from each broadcasting station at one time, and each of the pieces of program information about the programs is sent out in the chronological order of display of the programs. The program information about each program is sent out at shorter intervals as its temporal distance is nearer to the current time, and is sent out at longer intervals as its temporal distance is further away from the current time. More specifically, the receiver 3 receives the program information about each program at shorter intervals as its temporal distance is nearer to the current time, while the receiver 3 receives the program information about each program at longer intervals as its temporal distance is further away from the current time.

From the program information about each program, the program information being temporarily stored in the main storage 5, the central processor 6 extracts the date of the program, and compares the date of the program extracted thereby with the current date, to determine whether or not the program is one within the specified number of days from the current time (step ST2). The specified number of days is, for example, eight. The specified number of days can be a value initially set to the central processor 6, or can be a value set by the user.

When program information temporarily stored in the main storage 5 is one about a program outside within the specified number of days from the current time (when No in step ST2), the central processor ends the processing for storing the program information in the nonvolatile storage 7. More specifically, the central processor 6 determines that the program information is not an object to be stored in the nonvolatile storage 7, and deletes the program information from the main storage 5.

When program information temporarily stored in the main storage 5 is one about a program within the specified number of days from the current time (when Yes in step ST2), the central processor 6 determines whether or not the program of the program information has been ended until the current time (step ST3). Here, the central processor 6 determines that a program whose end time is either the same as or earlier than the current time is one which has been ended until the current time.

When the program of program information is one which has been ended until the current time (when Yes in step ST3), the central processor 6 determines that the program information is one about a program broadcasted today, and ends the processes on the program information.

By thus setting, as the temporal distance from the current time, the specified number of days and the program end time, and selecting pieces of program information on the basis of these quantities, the amount of usage of the storage required to store pieces of program information can be reduced remarkably.

When the program of program information is one which has not been ended until the current time (when No in step ST3), the central processor 6 frees up the storage area of the nonvolatile storage 7 in which the program information about an ended program is stored, in such a way that the storage area can be overwritten (step ST4).

After freeing up the storage area of the nonvolatile storage 7, the central processor 6 stores information required to display the program guide, among the program information which is determined, in step ST3, to be a storage object, in the nonvolatile storage 7 (step ST5). The information required to display the program guide includes, for example, time information (including a date, a day of the week, and a time), and information showing a broadcasting station name, a broadcast time, and a program title.

The series of processes shown in Fig. 2 is repeated whenever the program information about each program is stored in the main storage 5.

By restricting the pieces of program information stored in the nonvolatile storage 7 in the above-mentioned way, the amount of usage of the nonvolatile storage 7 required to stored pieces of program information can be reduced.

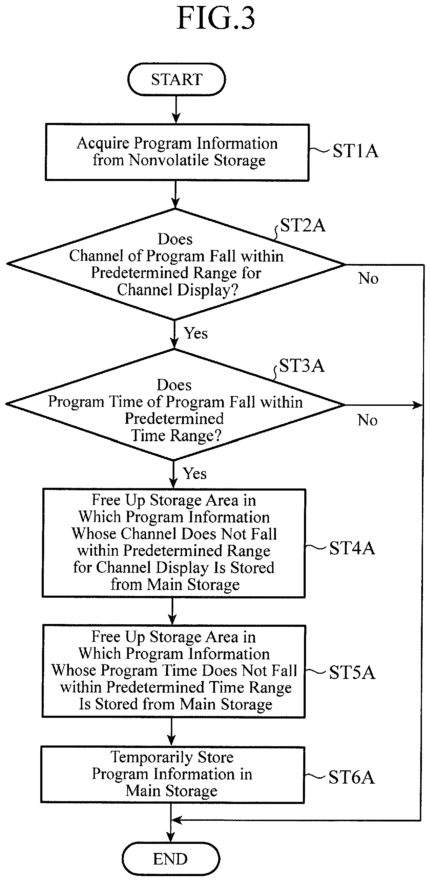

Fig. 3 is a flow chart showing the processing for storing program information in the main storage in the digital broadcast receiver according to Embodiment 1. A series of processes shown in Fig. 3 is one of, when, for example, the power supply of the digital broadcasting receiver 1 is turned on from the off state, the central processor 6 reading program information from the nonvolatile storage 7 and temporarily storing this program information in the main storage 5.

First, the central processor 6 acquires program information about each program from the nonvolatile storage 7 (step ST1A). Next, the central processor 6 determines whether the channel of the program information acquired in step ST1A falls within a predetermined range for channel display (step ST2A).

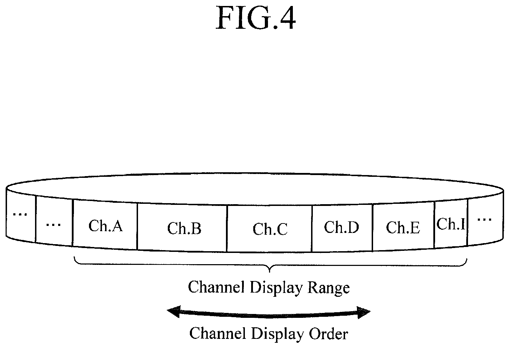

As shown in Fig. 4, for pieces of program information, the display order of their channels is defined in such a way that the channels are aligned along one dimension.

Therefore, by restricting the pieces of program information stored in the main storage 5 to pieces of program information whose channels fall within the predetermined range for channel display, the amount of usage of the main storage 5 can be reduced. The predetermined range for channel display is fixed in the digital broadcasting receiver 1 or is specified by the user on the basis of the memory usage of program information, which is expected from the data size of the pieces of program information about the programs currently being broadcasted via the channels, the user's convenience and the display performance.

When the channel of the program information does not fall within the predetermined range for channel display (when No in step ST2A), the central processor 6 determines that the program information is not an object to be stored in the main storage 5 and ends the processes on the program information.

In contrast, when the channel of the program information falls within the predetermined range for channel display (when Yes in step ST2A), the central processor 6 determines whether the program time of the program information falls within a predetermined time range (step ST3A). The predetermined time range is fixed in the digital broadcasting receiver 1 or is specified by the user on the basis of the memory usage of program information, which is expected from the data size of the pieces of program information about the programs currently being broadcasted, the user's convenience and the display performance. More specifically, whether the program time falls within the predetermined time range for program display in a time period after the current time is determined.

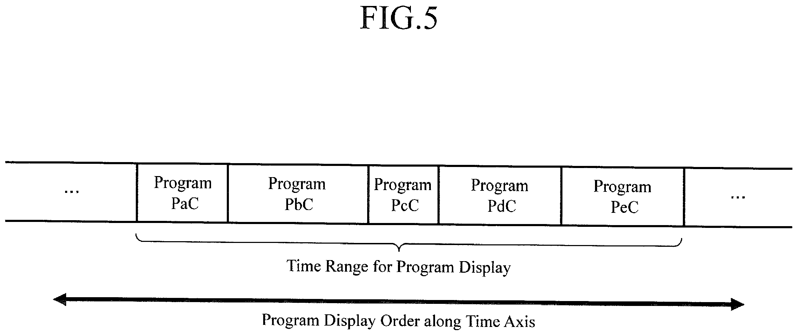

As shown in Fig. 5, for pieces of program information, their programs are defined in such a way as to be aligned in one dimension in order along a time axis. Therefore, by restricting the pieces of program information stored in the main storage 5 to those falling within the predetermined time range for program display, the amount of usage of the main storage 5 can be reduced.

When the program time does not fall within the predetermined time range for program display (when No in step ST3A), the central processor 6 determines that the program information is not an object to be stored in the main storage 5, and ends the processes on the program information.

In contrast, when the program time falls within the predetermined time range for program display (when Yes in step ST3A), the central processor 6 frees up the storage area of the main storage 5 in which program information not falling within the range for channel display is stored in such a way that the storage area can be overwritten (step ST4A).

Next, the central processor 6 frees up the storage area of the main storage 5 in which program information not falling within the predetermined time range for program display is stored in such a way that the storage area can be overwritten (step ST5A).

After that, the central processor 6 temporarily stores the program information about the program whose channel falls within the predetermined range for channel display and whose program time falls within the predetermined time range for program display in the time period after the current time, in the above-mentioned storage area of the main storage 5 (step ST6A).

The series of processes shown in Fig. 3 is repeated until the series of processes is performed on all the pieces of program information stored in the nonvolatile storage 7. By restricting the pieces of program information stored from the nonvolatile storage 7 into the main storage 5, the amount of usage of the main storage 5 required to store pieces of program information can be reduced.

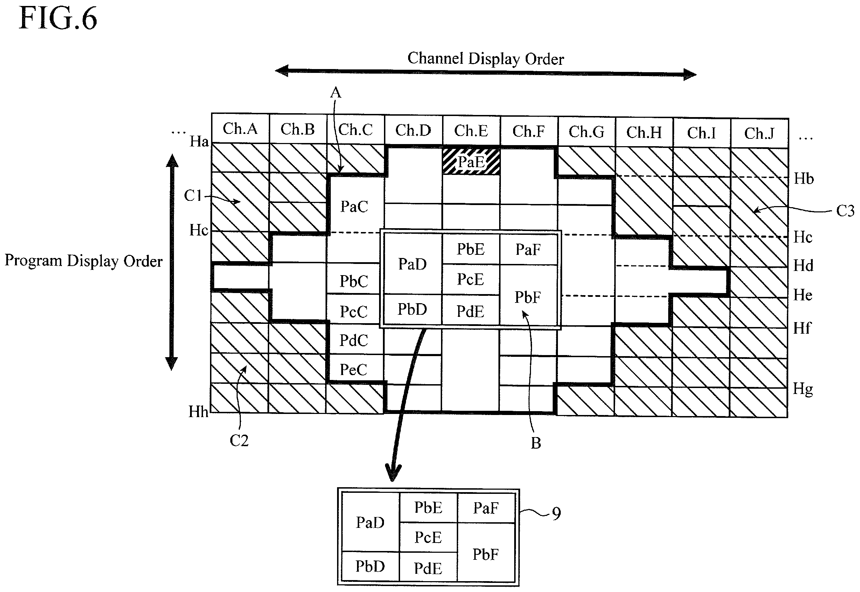

Further, when a channel (Ch.E) is currently being watched, the central processor 6, in step ST3A, can restrict the pieces of program information in such a way that the time range for program display becomes narrow with distance from the position of the channel Ch.E in the channel display order, as shown in Fig. 6.

In Fig. 6, the predetermined range for channel display which is used in the determination of step ST2A is one from a channel Ch.A to a channel Ch.I.

To the pieces of program information about channels Ch.D and Ch.F whose positions in the channel display order are adjacent to that of the channel Ch.E currently being watched, the same time range for program display (a range from a time Ha to a time Hh) as that set to the channel Ch. E is set, in order to promptly display programs whose channels are nearer to that of the program currently being watched. More specifically, for the channels adjacent to the channel currently being watched, the pieces of program information falling within the same time range as that set to the channel currently being watched are determined to be storage objects.

In contrast, for channels Ch.C and Ch.G whose positions in the channel display order are two channels away from that of the channel Ch.E, the time range for program display is further narrowed.

More specifically, to the channels Ch.C and Ch.G the time range for program display equal to a time period of (time Hg-time Hb) is set, and the pieces of program information falling within this time range are determined to be storage objects.

For channels Ch.B and Ch.H whose positions in the channel display order are further away from the channel Ch.E, the time range for program display is further narrowed.

More specifically, to the channels Ch.B and Ch.H the time range for program display equal to a time period of (time Hf-time Hd) is set, and the pieces of program information falling this time range are determined to be storage objects.

Further, for the channels Ch.A and Ch.I whose positions in the channel display order are further away from that of the channel Ch.E than those of the channels Ch.B and Ch.H, the time range for program display is further narrowed. More specifically, to the channels Ch.A and Ch.I the time range for program display equal to a time period of (time He-time Hd) is set, and the pieces of program information falling this time range are determined to be storage objects.

By thus predetermining the time range for program display for each channel with respect to the channel currently being watched, the central processor 6 determines the pieces of program information corresponding to a portion A enclosed by a thick line in Fig. 6, among the pieces of program information stored in the nonvolatile storage 7, to be objects to be stored in the main storage 5. In this case, the pieces of program information shown in hatched portions C1, C2 and C3 are determined to be not objects to be stored in the main storage 5, and the amount of usage of the main storage 5 required to store pieces of program information can be reduced.

Although the time range for program display is predetermined with respect to the channel currently being watched, the present invention is not limited to this example. For example, the time range for program display can be predetermined with respect to either the channel at the center of the predetermined range for channel display or a channel which the user often watches.

The series of processes of Fig. 3 can be applied not only to the time that the power supply of the digital broadcasting receiver 1 is turned on, but also to the process of storing the pieces of program information separated from the received signal in the main storage 5.

More specifically, when storing the pieces of program information which the separator 4, in step ST1 of Fig. 2, separates from the received signal in the main storage 5, the central processor 6 selects the pieces of program information about programs whose program times fall within the predetermined time range for program display from among the pieces of program information about programs whose channels fall within the predetermined range for channel display. The central processor further, in step ST2, selects the pieces of program information about programs within the specified number of days from the current time from among the above-mentioned pieces of program information selected, and further, in step ST3, selects the pieces of program information about programs which have not been ended and stores these pieces of program information in the nonvolatile storage 7. Even if the processing is performed in this way, the amount of usage of the nonvolatile storage 7 required to store pieces of program information can be reduced. Further, when a channel serving as the reference in step ST1 (e.g. , the channel currently being watched) is set, by applying the series of processes shown in Fig. 3, the pieces of program information corresponding to the portion A enclosed by the thick line in Fig. 6 are stored in the nonvolatile storage 7.

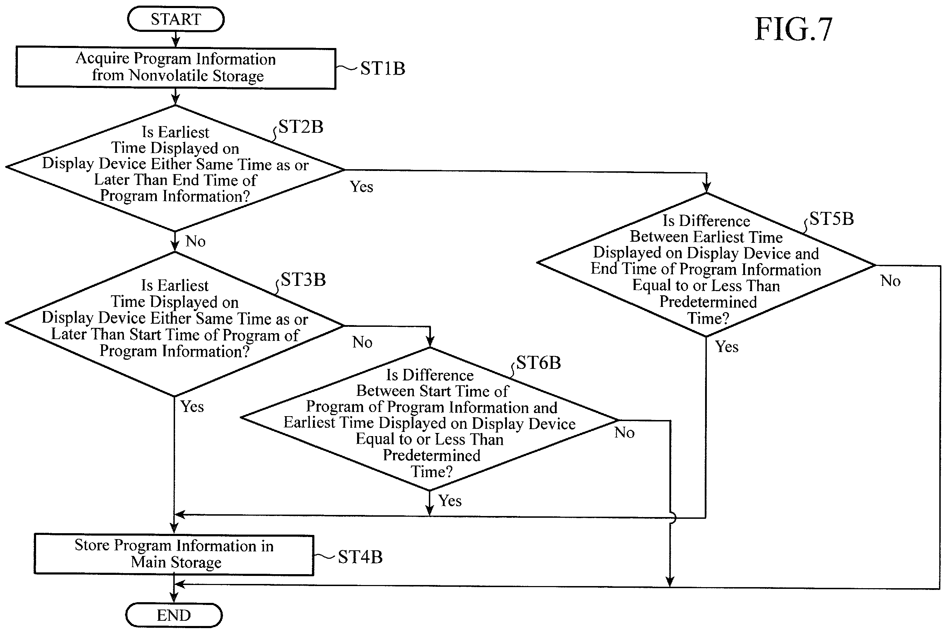

Fig. 7 is a flow chart showing the process of selecting pieces of program information by using a time comparison in the digital broadcasting receiver according to Embodiment 1. The subsequent explanation will be made by taking, as an example, a case in which the pieces of program information corresponding to the portion A enclosed by the thick line in Fig. 6 are stored in the nonvolatile storage 7 and a program guide portion B is displayed on the display device 9. It is assumed that the range for channel display which is displayed on the display device 9 is one including three channels from the channel Ch.D to the channel Ch.F.

First, the central processor 6 acquires the program information about each program from the nonvolatile storage 7 (step ST1B). Next, the central processor 6 determines whether or not the earliest time displayed on the display device 9 is either the same time as or later than the end time of the program of the acquired program information (step ST2B). For example, the central processor checks whether the end time of the program of the program information acquired in step ST1B is either the same as or earlier than the earliest time Hc displayed on the display device 9, in the example shown in Fig. 6.

When the earliest time displayed on the display device 9 is earlier than the end time of the program of the program information (when No in step ST2B), the central processor 6 determines whether or not the earliest time displayed on the display device 9 is either the same as or later than the start time of the program of the acquired program information (step ST3B). For example, the central processor checks whether the start time of the program of the program information acquired in step ST1B is either the same as or later than the earliest time Hc displayed on the display device 9, in the example shown in Fig. 6.

When the earliest time displayed on the display device 9 is either the same as or later than the start time of the program of the program information (when Yes in step ST3B), the central processor 6 determines that the program of the program information is included in the display range of the program guide (the program guide portion B), and stores the program information in the main storage 5 (step ST4B).

In contrast, when the earliest time displayed on the display device 9 is either the same as or later than the end time of the program of the program information (when Yes in step ST2B), the central processor 6 determines whether or not the time difference which is the subtraction of the end time of the program of the program information from the earliest time Hc displayed on the display device 9 is equal to or less than a predetermined time (step STSB). The predetermined time in step ST5B is, for example, the time interval between the program and the next program.

When the above-mentioned time difference is equal to or less than the predetermined time (when Yes in step ST5B), the central processor 6 determines the program of the program information to be a candidate for display and stores the program information in the main storage 5 (step ST4B). In order to, for example, promptly display a portion outside the display range when the display screen of the program guide is scrolled, the pieces of program information about programs whose program times are near to the time Hc are determined to be objects to be stored in the main storage 5.

In contrast, when the above-mentioned time difference is not equal to or less than the predetermined time (when No in step ST5B), the central processor 6 ends the processes on the program information without determining the program information to be a storage object.

When the earliest time displayed on the display device 9 is earlier than the start time of the program of the program information (when No in step ST3B), the central processor 6 determines whether or not the time difference which is the subtraction of the earliest time displayed on the display device 9 from the end time of the program of the program information is equal to or less than a predetermined time (step ST6B). The predetermined time in step ST6B is, for example, equal to or less than the time range for display of the program guide.

When the above-mentioned time difference is equal to or less than the predetermined time (when Yes in step ST6B), the central processor 6 determines that the start time of the program of the program information is earlier than the latest time displayed on the display device 9, and the program of the program information falls within the display range, and stores the program information in the main storage 5 (step ST4B).

In contrast, when the above-mentioned time difference is not equal to or less than the predetermined time (when No in step ST6B), the central processor 6 ends the processes on the program information without determining the program information to be an object to be stored in the main storage 5.

The series of processes of Fig. 7 is repeated until the series of processes is performed on all the pieces of program information stored in the nonvolatile storage 7. By thus using the pieces of program information stored in the main storage 5, the program guide portion B is displayed on the display device 9, as shown in Fig. 6.

As mentioned above, the digital broadcasting receiver according to this Embodiment 1 includes the receiver 3 that receives a digital broadcast, the separator 4 that separates pieces of program information from the received signal of the receiver 3, the nonvolatile storage 7 that stores pieces of program information, the main storage 5 that temporarily stores pieces of program information read from the nonvolatile storage 7, and the central processor 6 that restricts the storing of pieces of program information according to their temporal distances from the current time, generates a program guide on the basis of pieces of program information read from the main storage 5, and displays the program guide on the display device 9.

Because the digital broadcasting receiver is configured in this way, the amount of usage of the storage required to store pieces of program information can be reduced. For example, conventionally, the pieces of program information about programs for at least one day are determined to be storage objects. In contrast with this, according to the present invention, the pieces of program information to be stored are restricted according to their temporal distances from the current time. As a result, the amounts of usage of the main storage 5 and the nonvolatile storage 7 required to store pieces of program information can be reduced remarkably compared with those in conventional digital broadcasting receivers.

Further, according to this Embodiment 1, the central processor 6 restricts the pieces of program information stored in the nonvolatile storage 7 to the pieces of program information about programs for the specified number of days from the current time, and further excludes the pieces of program information about programs whose end times are either the same as or earlier than the current time from the storage objects. By thus excluding the pieces of program information about programs which have been ended until the current time from the storage objects, the amount of usage of the nonvolatile storage 7 required to store pieces of program information can be further reduced.

In addition, according to this Embodiment 1, the central processor 6 selects the pieces of program information about programs whose channels fall within the predetermined range for channel display and whose program times fall within the predetermined time range for program display, and stores the pieces of program information in the nonvolatile storage 7. By doing in this way, the amount of usage of the nonvolatile storage 7 required to store pieces of program information can be further reduced.

In addition, according to this Embodiment 1, the central processor 6 selects the pieces of program information about programs whose channels fall within the predetermined range for channel display and whose program times fall within the predetermined time range for program display from the nonvolatile storage 7, and temporarily stores the pieces of program information in the main storage 5. By doing in this way, the amount of usage of the main storage 5 required to store pieces of program information can be further reduced.

In addition, according to this Embodiment 1, the central processor 6 reads the pieces of program information of each channel from the nonvolatile storage 7 in such a way that the time range for program display for the channel becomes narrow with distance, in position in the channel display order, between the channel and another channel serving as the reference, and temporarily stores the program information in the main storage 5. By doing in this way, the amount of usage of the main storage 5 required to store pieces of program information can be further reduced.

While the present invention has been described in its preferred embodiment, it is to be understood that various changes can be made in an arbitrary component according to the embodiment, and an arbitrary component according to the embodiment can be omitted within the scope of the invention.

### INDUSTRIAL APPLICABILITY

Because the digital broadcasting receiver according to the present invention can reduce the amount of usage of the storage required to store pieces of program information, the digital broadcasting receiver is suitable for use as, for example, a vehicle-mounted digital broadcasting receiver.

### EXPLANATIONS OF REFERENCE NUMERALS

1 digital broadcast receiver, 2 antenna, 3 receiver, 4 separator, 5 main storage, 6 central processor, 7 nonvolatile storage, 8 decoder, and 9 display device

## Claims

1. A digital broadcast receiver comprising:
a receiver to receive a digital broadcast;
a separator to separate program information from a received signal of said receiver;
a nonvolatile storage to store program information;
a temporary storage to temporarily store program information read from said nonvolatile storage; and
a central processor to restrict the storing of program information in accordance with its temporal distance from a current time, to generate a program guide on a basis of program information read from said temporary storage, and to display the program guide on a display device.

2. The digital broadcast receiver according to claim 1, wherein said central processor restricts the program information stored in said nonvolatile storage to program information about a program for several specified days from the current time, and further excludes program information about a program whose end time is either same as or earlier than the current time from storage objects.

3. The digital broadcast receiver according to claim 1, wherein said central processor selects program information about a program whose channel falls within a predetermined range for channel display and whose program time falls within a predetermined time range for program display, and stores the program information in said nonvolatile storage.

4. The digital broadcast receiver according to claim 1, wherein said central processor reads program information about a program whose channel falls within a predetermined range for channel display and whose program time falls within a predetermined time range for program display from said nonvolatile storage, and temporarily stores the program information in said temporary storage.

5. The digital broadcast receiver according to claim 4, wherein said central processor reads program information of each channel from said nonvolatile storage in such a way that a time range for program display for said channel becomes narrow with distance, in position in channel display order, between said channel and another channel serving as a reference, and temporarily stores the program information in said temporary storage.

6. A program information storing method for use in a digital broadcast receiver provided with a nonvolatile storage to store pieces of program information, and a temporary storage to temporarily store pieces of program information read from said nonvolatile storage, said program information storing method comprising the steps of:
in a receiver, receiving a digital broadcast;
in a separator, separating program information from a received signal of said receiver; and
in a central processor, restricting the storing of program information in accordance with its temporal distance from a current time, generating a program guide on a basis of program information read from said temporary storage, and displaying the program guide on a display device.
